# FASCICULE DE BREVET EUROPEEN

(11) **EP 2 805 393 B1**
(45) Date de publication et mention de la délivrance du brevet: **09.12.2015**
(21) Numéro de dépôt: 13709961.0
(22) Date de dépôt: 21.01.2013
(51) Int. Cl.: H02G 3/04

(54) **GAINE DE PROTECTION NOTAMMENT POUR CABLES ELECTRIQUES ET SON PROCEDE DE FABRICATION**
SCHUTZMANTEL, INSBESONDERE FÜR STROMKABEL, UND VERFAHREN ZU SEINER HERSTELLUNG
PROTECTIVE SHEATH, IN PARTICULAR FOR ELECTRIC CABLES, AND METHOD FOR MANUFACTURING SAME

(30) Priorité: 20.01.2012 US 201261632219 P
(43) Date de publication de la demande: 26.11.2014
(73) Titulaire: Aerazur, 78370 Plaisir (FR)
(72) Inventeur: WALTON, Patrick, Durham DH2 2JY (GB); WELLS, Brian, Albert, Slough Berkshire SL1 2LF (GB)
(74) Mandataire: Aupetit, Muriel J. C.
(86) Numéro de dépôt international: PCT/FR2013/050130
(87) Numéro de publication internationale: WO 2013/107995

(56) Documents cités:
- DE-U1- 20 208 656
- DE-U1- 20 208 656
- FR-A1- 2 812 465
- FR-A1- 2 812 465

## Description

L'invention concerne une gaine de protection notamment pour fils, câbles électriques ou similaires, comportant un assemblage d'au moins un fil non conducteur de l'électricité, dit fil d'âme et participant à la forme finale donnée à la gaine, et de fils conducteurs de l'électricité, ainsi qu'au moins un film de protection recouvrant tout ou partie d'au moins l'une des faces de la gaine.

L'invention est également relative au procédé de fabrication d'une telle gaine.

L'invention sera plus particulièrement décrite en regard d'une gaine de protection destinée à recevoir des fils/câbles électriques, sans toutefois y être limitée.

La gaine de protection de l'invention est de préférence une gaine ouverte sur sa longueur et est dite auto-fermable, l'un des bords de la gaine recouvrant et allant au-delà du bord opposé. Ainsi, cette gaine s'ouvre facilement en écartant les bords de manière à la placer autour d'un toron de câbles et se referme automatiquement autour du toron en présentant une zone de recouvrement.

Les gaines de protection de faisceaux électriques sont utilisées dans de nombreux domaines, tels que l'aéronautique, l'aérospatial, l'automobile et autres industries, de manière à acheminer en toute sécurité ces faisceaux de câbles véhiculant entre autres des signaux électriques.

Les gaines sont très diverses selon le domaine d'application et le type de protection exigée. Ces gaines présentent de manière cumulée ou non des propriétés de protection contre des agressions extérieures, du type mécanique, chimique, ou liées à la température extérieure.

Certaines de ces gaines de protection, telles que celle divulguée dans la demande de brevet FR2812465, présente en outre un blindage électromagnétique afin de protéger les faisceaux électriques de toutes interférences électromagnétiques et/ou présentent des éléments conducteurs de l'électricité destinés à assurer la continuité électrique du montage dans lequel lesdites gaines interviennent.

Il est ainsi connu des gaines fabriquées à partir d'un assemblage de fils tissés, dont certains sont non conducteurs de l'électricité du type en matière plastique, et d'autres sont en matériau conducteur de l'électricité tels que des fils métalliques. Les fils non conducteurs forment les fils de trame, tandis que les fils métalliques constituent des fils de chaîne et éventuellement de trame. On rappelle que les fils de chaîne s'étendent longitudinalement à la gaine tandis que les fils de trame sont orientés transversalement à ceux de chaîne, radialement à la gaine (selon la largeur de la gaine fabriquée, la largeur étant la dimension transversale à la longueur de la gaine).

Les fils de trame non conducteurs sont avantageusement en matière plastique, par exemple en PPS (polyphénylène sulfide), afin de thermoformer un ruban plat constitué par l'assemblage des fils et réaliser ainsi une gaine de forme tubulaire. Ce type de gaine reste fendue tel qu'explicité plus haut.
L'intérieur de telles gaines est parfois revêtu d'un film de protection évitant un contact direct des câbles à protéger avec les fils de la gaine, notamment ceux métalliques qui possèdent malencontreusement des propriétés abrasives.

Ce film de protection est aujourd'hui rendu solidaire du ruban de fils assemblés par couture. Des coutures sont en effet réalisées grâce à des fils dits de couture selon la longueur de la gaine, à proximité des deux bords libres du film et éventuellement selon l'axe médian de la gaine pour des grandes largeurs.

Cependant, la couture peut conduire à sectionner, ou tout le moins endommager, les fils de la gaine, métalliques et/ou les autres, dégradant les propriétés de protection de la gaine, en particulier au regard de la résistance de la gaine dans des milieux environnementaux hostiles où certains paramètres peuvent jouer un rôle dommageable, par exemple la température, un très fort taux d'humidité et/ou de salinité, tels que les brouillards salins. En effet, le fil métallique du textile de la gaine est composé d'une âme en cuivre et d'un enrobage de protection en nickel. Si le nickel vient à être rayé, ôté lors de l'étape de couture, le risque de corrosion est amorcé ; l'âme en cuivre n'étant plus protégée, elle s'oxydera très rapidement, dégradant la gaine qui ne garantira plus une protection optimale des câbles électriques.

Un trop grand nombre de fils métalliques sectionnés risque alors de détériorer les caractéristiques électriques de la gaine, comme par exemple la continuité et/ou la protection électromagnétique, et d'endommager les câbles circulant à l'intérieur de la dite gaine.

En outre, il est parfois nécessaire d'ôter sur une certaine longueur de la gaine, le film de protection, en vue d'assurer la continuité électrique entre les fils métalliques de deux gaines à relier pour réaliser une déviation sur un toron de câbles électriques, avec éventuellement des pièces d'interface mécanique en métal ou métallisées. Cette opération de retrait du film peut risquer de détériorer la gaine dans laquelle sont cousus les fils de couture liant mécaniquement le film au ruban de fils.

L'invention a donc pour but de proposer une gaine de protection multi matériaux dont la solidarisation du film de protection intérieur n'engendre pas les inconvénients précités. En particulier, l'invention fournit une gaine de protection à l'abrasion des câbles intérieurs et/ou une protection mécanique et/ou de blindage électromagnétique pour ces câbles, la gaine étant à base d'un assemblage de fils métalliques et autres fils non conducteurs qui ne présentent aucun risque d'avoir été endommagés lors de la fabrication ou de l'être lors de l'utilisation de la gaine.

Selon l'invention, la gaine de protection comportant un assemblage d'au moins un fil non conducteur de l'électricité, dit fil d'âme et participant à la forme finale donnée à la gaine, et de fils conducteurs de l'électricité, ainsi qu'au moins un film de protection associé à tout ou partie d'au moins l'une des faces de la gaine, est caractérisée en ce que le film de protection est associé à l'assemblage de fils par soudage.

L'assemblage de fils forme un ruban sur lequel est donc apposé le film de protection en étant rendu solidaire par soudage.

Ainsi, cette solidarisation n'engendre aucune couture. La gaine ne risque pas de présenter les inconvénients de l'art antérieur liés à une fixation par couture.

Le film peut être soudé sur une partie seulement de l'une des faces de la gaine.

Le film est soudé selon une ou des surfaces continues et/ou discontinues.

L'assemblage de fils (le ruban) comporte au moins un matériau apte à permettre la soudure du film de protection.

Ainsi, la présence dans l'assemblage de fils (le ruban) d'un matériau apte à une fixation par soudure, telle que la présence d'un ou de plusieurs fils spécifiques dits de soudage dont la matière est compatible avec celle du film de protection pour assurer une solidarisation par soudure et non pas par couture, évite tout piquage et donc risque de dégradation des fils conducteurs et non conducteurs composant le ruban.

Les fils du ruban servant à la solidarisation par soudage avec le film de protection peuvent être le fil d'âme ou la combinaison du fil d'âme et d'autres fils inclus dans l'assemblage des fils du ruban.

Dans un mode de réalisation préféré, le film est soudé de manière discontinue, en particulier selon au moins plusieurs points de soudage.

Dans un mode de réalisation, la gaine comporte au moins un fil supplémentaire non conducteur distinct du fil d'âme, destiné au soudage, qui est intégré dans l'assemblage des fils (le ruban) lors de la fabrication dudit assemblage. Ce fil supplémentaire peut être fait ou non d'une matière distincte de la matière du fil d'âme. Le fil supplémentaire est apte à assurer une solidarisation par soudage, en particulier par discontinuité selon une multiplicité de points de soudage.

La matière du ou des fils de soudage est de préférence différente de celle du fil d'âme du ruban afin que les étapes de soudage du film puis de thermoformage du ruban recouvert du film puissent être successivement réalisées, sans que la solidarisation par soudage ne modifie la forme à plat du ruban avant ou après sa mise en forme. La mise en forme de la gaine peut être effectuée avant ou après la fixation du film sur le ruban de fils.

L'assemblage des fils (le ruban) est réalisé par tissage et/ou tricotage et/ou tressage.

L'assemblage des fils (le ruban) est avantageusement un tissé obtenu par le tissage d'au moins un fil de trame en matériau non conducteur correspondant au fil d'âme, et de fils de chaîne formés par les fils conducteurs et éventuellement d'autres fils dans un matériau conducteur ou non, au moins l'un des fils en matériau non conducteur utilisé pour le soudage étant incorporé en tant que fil de chaîne ou de trame. Les fils de trame peuvent comprendre des fils conducteurs et/ou des fils dans différents matériaux non conducteurs.

La gaine peut comprendre des fils fonctionnels, par exemple à fonction d'identification ou de repérage. Ainsi, le ruban de fils peut comporter des fils de couleur qui permettent d'identifier le type de gaine (son type de protection). Le ruban peut comprendre de manière connue au moins un fil permettant de repérer le taux de remplissage maximal accepté par la gaine en utilisation, ce type de fil étant à distance des bords de la gaine et ne devenant visible dès lors que le recouvrement de la gaine en position fermée est insuffisant car contenant un volume trop important de câbles qui tendent à ouvrir la gaine.

De préférence, le fil de soudage non conducteur est incorporé à l'assemblage des fils (le ruban) en tant que fil de chaîne.

Le fil d'âme non conducteur (qui peut être un fil de soudage) et les fils de soudage sont mono ou multi-filaments.

Le fil d'âme non conducteur est de préférence fait d'un matériau thermo-formable.

Le fil d'âme non conducteur est en particulier en matière plastique ou en matière composite.

Le fil d'âme non conducteur peut être composé d'une ou d'une combinaison de matières plastiques choisies parmi notamment: polytétrafluoroéthylène (PTFE), perfluoroalkoxy (PFA), polyamide (PA), polypropylène (PP), polyoxyméthylène (POM), polyéthylétherkétone (PEEK), polyester, polysulfure de phénylène (PPS), polysulfone (PSU), polyimide (PI), polyamide-imide (PAI), polyfluorure de vinylidène (PVDF), polyaryléthercétone (PAEK) et polyétherimide (PEI).

Le fil d'âme non conducteur présente par exemple un diamètre inférieur à 10 mm.

De préférence, le fil de soudage est en matière plastique, du type par exemple polytétrafluoroéthylène (PTFE), perfluoroalkoxy (PFA), polyamide (PA), polypropylène (PP), polyoxyméthylène (POM), polyéthylétherkétone (PEEK), polyester, polysulfure de phénylène (PPS), polysulfone (PSU), polyimide (PI), polyamide-imide (PAI), polyfluorure de vinylidène (PVDF), polyaryléthercétone (PACK) et polyétherimide (PEI). Il présente par exemple un diamètre inférieur à 10 mm.

Le fil de soudage est mono ou multi-filaments Le fil de soudage non conducteur (qui peut être le film d'âme ou un autre fil) présente par exemple un diamètre inférieur à 10 mm. Il peut aussi se présenter sous la forme d'une bande étroite, par exemple de largeur de l'ordre de 2 mm et d'une épaisseur inférieure à 10 mm.

Les fils conducteurs sont à base de métal ou métallisés. Ils comprennent un matériau métallique choisi notamment, sans caractère limitatif, parmi le cuivre nickelé, le cuivre étamé, le cuivre argenté, le nickel, l'acier inoxydable. Ils peuvent en variante être formés d'un polymère métallisé, le polymère constituant le coeur du fil et étant recouvert de métal.

Les fils conducteurs présentent de préférence des diamètres inférieurs à 10 mm.

Un fil conducteur se présente de préférence sous la forme d'un mono-filament ou d'un assemblage retordu ou non de multi-filaments.

Le film de protection est de préférence à base de matière plastique. Il peut comprendre un matériau composite. Il peut être issu d'un assemblage de fils en se présentant sous la forme d'une bande non tissée, ou tissée ou encore tricotée. Il peut s'agir également d'un matériau extrudé. Il est par exemple fait de polytétrafluoroéthylène (PTFE), PFA, méta-aramide, PPS, PEEK, etc....

De préférence, l'assemblage des fils de la gaine comporte au moins deux fils de soudage parallèles s'étendant longitudinalement à la gaine, et espacés en étant disposés à proximité des deux bords libres longitudinaux du film de protection. Les soudures sont par exemple agencées à une distance de l'ordre de 10 mm des bords longitudinaux du film de protection.

Plusieurs autres fils de soudage peuvent être ajoutés aux fils de soudage de bordure, en particulier au moins un troisième fil supplémentaire est intégré selon l'axe longitudinal médian de la gaine.

Selon une caractéristique, la solidarisation du film (le soudage) aux fils de soudage non conducteurs est réalisée par exemple par transfert de chaleur, ultrason ou tout autre moyen usuel permettant la fusion desdits fils avec le film.

Le film de protection présente de préférence une épaisseur inférieure à 10 mm, en particulier inférieur à 1 mm, de préférence de l'ordre de 0,05 mm.

Le film de protection est de préférence rendu solidaire uniquement selon la direction longitudinale de la gaine, en raison de la présence des fils de soudage selon la direction longitudinale. Le film de protection est de préférence soudé en une multiplicité de points de soudage alignés longitudinalement à la gaine ou s'étendant dans une direction générale selon l'axe longitudinal de la gaine.

De préférence, au moins sur certaines parties de la gaine, aucune soudure n'est faite transversalement à l'axe de la gaine, ce qui facilite aux extrémités libres du film sa préhension afin de le désolidariser si nécessaire. En effet, lors de l'utilisation de la gaine, il est utile de peler le film de protection sur une certaine longueur de façon que la gaine électrique dotée de ses fils métalliques serve d'interface de connexion électrique par exemple entre deux gaines à relier et/ou avec des pièces mécaniques de connexion en métal ou métallisées.

Une fois, le film de protection décollé sur une certaine longueur, celui-ci est découpé transversalement à l'axe longitudinal de la gaine ou retourné sur lui-même.

En outre, l'absence de fil associé mécaniquement (par couture tel que dans l'art antérieur) au ruban de fils assemblés, évite tout risque de détérioration des fils composants le ruban/la gaine durant la vie de la gaine (lorsque le film doit être ôté).

Par conséquent, le retrait du film de protection est grandement facilité du fait qu'il suffit de tirer sur le film pour le décoller, aucun élément de liaison par assemblage mécanique entre le film et le ruban n'existant, ce qui par ailleurs garantit de ne pas altérer la gaine.

La largeur du ruban d'assemblage de fils est adaptée au diamètre souhaité de la gaine.

La gaine de protection de l'invention est en particulier utilisée pour le blindage électromagnétique et s'applique à tous domaines, aéronautique, aérospatial, automobile, maritime, bâtiment, etc...

L'invention a également trait à un procédé de fabrication de la gaine de l'invention.

Ce procédé comporte une étape d'assemblage de plusieurs fils dont des fils conducteurs de l'électricité pour former un ruban, une étape d'association d'un film de protection sur tout ou partie d'au moins l'une des faces du ruban, et est caractérisé en ce que l'étape d'association du film de protection est réalisée par soudage.

L'étape d'assemblage est réalisée par tissage et/ou tricotage et/ou tressage des fils.

Si l'étape d'assemblage ne constitue pas en soi également une étape de mise en forme de la gaine, le procédé comporte une étape supplémentaire de mise en forme de la gaine, de préférence par thermoformage, avant ou après solidarisation du film de protection. Avantageusement, le thermoformage est obtenu grâce à la présence de fils du ruban en matériau thermo-formable.

La présente invention est maintenant décrite à l'aide d'exemples uniquement illustratifs et nullement limitatifs de la portée de l'invention, et à partir des illustrations ci-jointes, dans lesquelles :
- La figure 1 est une vue schématique en perspective de la gaine de l'invention en vue de son utilisation;
- La figure 2 représente une vue schématique en coupe et de côté du ruban de fils à plat de la gaine selon son axe longitudinal et revêtu en partie du film de protection ;
- La figure 3 est une vue schématique de dessus du ruban de fils de la gaine ;
- La figure 4 est une vue schématique en perspective et des dessus de la figure 2.

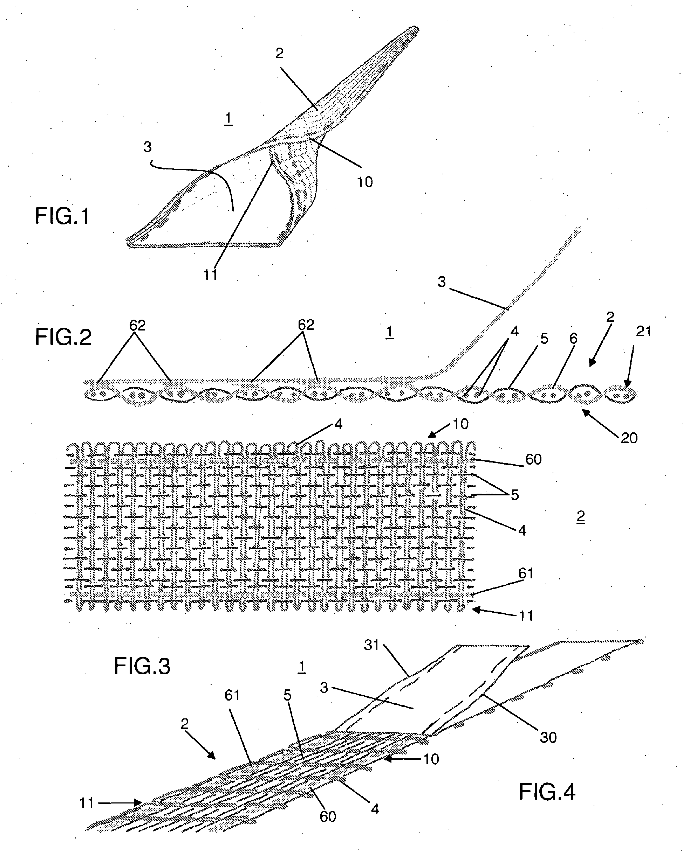

La gaine de protection 1 illustrée sur la figure 1 est présentée en vue de son utilisation. Elle est destinée à loger des câbles électriques pour les protéger contre l'abrasion, mécaniquement et électro-magnétiquement et servir si besoin d'interface de connexion électrique entre deux autres gaines et/ou avec des pièces mécaniques en métal ou métallisées.

La gaine de protection 1 est de forme cylindrique à section circulaire ou autre.

La gaine de protection 1 est fendue longitudinalement et est refermée sur elle-même, l'un des bords longitudinaux 10 étant rabattu sur et au-delà du bord longitudinal opposé 11. Cette gaine dite auto-fermable facilite son montage autour des câbles, d'autant plus lorsque les câbles sont déjà installés. Elle facilite également la réparation, l'enlèvement de câbles déjà installés à l'intérieur de la gaine ou l'ajout de câbles sur un toron déjà en place dans la gaine.

Le montage de la gaine se fait en écartant les bords longitudinaux 10 et 11 afin de l'ouvrir et permettre de la disposer autour des câbles. En relâchant les bords, la gaine se referme automatiquement.

Le diamètre de la gaine et la portion de recouvrement des bords sont adaptés à la grosseur du faisceau de câbles à protéger.

La gaine 1 est obtenue à partir d'un ruban à plat 2 tel que visible sur les figures 2 à 4 qui est destiné à être thermoformé pour lui donner une forme tubulaire ou autre.

La gaine comporte d'une part un ruban 2 d'assemblage de fils constituant la structure de la gaine et comprenant des fils métalliques pour le blindage électromagnétique, des fils en matière thermoplastique pour la mise en forme et d'autres fils pour l'identification de la gaine et le taux de recouvrement minimal accepté en utilisation, et d'autre part un film de protection 3 recouvrant tout ou en partie la face accueillant les câbles et servant à protéger ces derniers de l'abrasion des fils métalliques. Il n'est pas exclu qu'un autre film puisse être rendu solidaire par le même procédé de l'invention sur la face opposée de la gaine.

Le ruban 2 présente (figure 2) une face externe 20 destinée à être en regard de l'environnement extérieur une fois la gaine formée, et une face opposée interne 21 sur laquelle est associé le film de protection 3.

En regard des figures 2 à 4, le ruban 2 est un assemblage tissé comprenant un fil de trame 4 en matériau thermo-formable (formant le fil d'âme du ruban) et non conducteur, des fils de textile non référencés et des fils métalliques 5 formant les fils de chaîne. Des fils métalliques et non métalliques peuvent aussi être incorporés en fils de trame.

Le fil de trame 4 est mono ou multi-filaments.

Les fils métalliques 5 sont mono ou multi-filaments. Ils sont de préférence issus d'un ruban métallique tressé.

Le fil de trame 4 est tissé avec les fils métalliques 5 pour s'entrelacer et former le ruban 2.

Selon l'invention, l'assemblage de fils comporte au moins un fil destiné à assurer la solidarisation du film 3 par soudage. Ce fil peut être le fil d'âme 4 constitué du fil de trame dans l'assemblage tissé ou d'un ou de plusieurs autres fils distincts du fil d'âme 4 et des fils conducteurs 5. Ce ou ces fils réalisant le soudage sont nommés fils de soudage.

Dans un mode de réalisation particulier, le ruban 2 comporte des fils supplémentaires 6 formant les fils de soudage. Ces fils de soudage 6 sont agencés en fils de chaîne et introduits dans le ruban lors de l'étape de tissage.

Les fils de soudage 6 sont compatibles avec le matériau du film de protection 3 pour se solidariser avec par soudage. Les fils de soudage sont dans l'exemple de réalisation en un matériau distinct du matériau du fil de trame 4. Toutefois, ils pourraient être dans le même matériau que celui du fil de trame.

Les fils de soudage 6 sont de préférence en matière plastique, par exemple PTFE, PFA, PA, PP, POM, PEEK, polyester, PSU, PPS, PI, PAI, PVDF, PAEK ou PEI.

Les fils de soudage 6 s'étendent de préférence dans la direction longitudinale de la gaine.

La gaine comprend de préférence au moins deux fils de soudage 60 et 61 parallèles et espacés, et agencés à proximité des deux bords longitudinaux libres respectifs 30 et 31 du film 3. Les fils de soudage sont de préférence intégrés à une distance inférieure à 10 mm desdits bords.

D'autres fils de soudage peuvent être répartis dans le textile en s'étendant en tant que fils de chaîne.

Le film de protection 3 est appliqué contre le ruban 2 et n'y est nullement associé par un assemblage mécanique.

Le film de protection 3 n'est lié au ruban 2 que par des points de soudure 62 s'étendant de préférence longitudinalement au textile à plat ou axialement à la gaine.

Le film de protection 3 est rapporté sur le ruban 2 de préférence avant le thermoformage de la gaine.

En variante, le film de protection 3 peut être rendu solidaire après thermoformage de la gaine toujours par soudure. Cette variante est néanmoins moins commode car elle nécessite d'ouvrir la gaine et de la maintenir à plat, puis de la refermer.

Le film de protection 3 est fait d'un matériau non abrasif, de préférence en matière plastique ou assemblage de fils de textile, composite. Il se présente par exemple sous la forme d'une bande tissée ou tricotée. Il est par exemple en PTFE, PFA, méta-aramide, PPS, PEEK.

Le film de protection 3 présente une épaisseur de préférence inférieure à 10 mm. La fonctionnalité du film est assurée avec les matériaux précités pour une épaisseur de l'ordre de 0,05 mm.

Le film de protection 3 est solidarisé par soudage contre les fils de soudage 6 du ruban 2.

Le soudage est réalisé par toute technique connue, telle que par soudage thermique (transfert de chaleur), par ultrasons.

Le film de protection 3 est apte à être détaché du ruban 2 après solidarisation, par simple traction telle qu'une peau se pelant. Cette opération est assimilable en quelque sorte à la manière dont on retire le film de protection d'un pot de yaourt.

Le film peut avantageusement être pelé, avant thermoformage de la gaine ou lors de l'utilisation de la gaine, sur une certaine longueur et être découpé ou retroussé.

Ainsi, la gaine de protection de l'invention fournit la protection souhaitée, mécanique et de blindage et de continuité électrique ainsi qu'une protection contre l'abrasion des câbles électriques destinés à y être logés, cette protection étant pérenne sans risque d'altération de ses propriétés dans le temps.

## Revendications

1. Gaine de protection (1) comportant un assemblage d'au moins un fil (4) non conducteur de l'électricité, dit fil d'âme et participant à la forme finale donnée à la gaine, et de fils (5) conducteurs de l'électricité, ainsi qu'au moins un film de protection (3) associé à tout ou partie d'au moins l'une des faces de la gaine, **caractérisée en ce que** le film de protection (3) est associé à l'assemblage de fils par soudage.

2. Gaine de protection selon la revendication 1, **caractérisée en ce que** l'assemblage de fils comporte au moins un matériau apte à permettre la soudure du film de protection.

3. Gaine de protection selon la revendication 1 ou 2, **caractérisée en ce que** le film de protection (3) est soudé selon une ou des surfaces continues et/ou discontinues.

4. Gaine de protection selon l'une quelconque des revendications précédentes, **caractérisée en ce que** l'assemblage de fils comporte au moins un fil supplémentaire non conducteur (6, 60, 61) distinct du fil d'âme et destiné au soudage, notamment fait d'une matière distincte de la matière du fil d'âme.

5. Gaine de protection selon l'une quelconque des revendications précédentes, **caractérisée en ce que** l'assemblage de fils est obtenu par le tissage d'au moins un fil de trame formé par le fil d'âme (4) en matériau non conducteur et de fils de chaîne formés par les fils conducteurs (5), et éventuellement d'autres fils en matériau non conducteur, au moins l'un des fils en matériau non conducteur utilisé pour le soudage étant incorporé en tant que fil de chaîne ou de trame.

6. Gaine de protection selon l'une quelconque des revendications précédentes, **caractérisée en ce que** le film de protection (3) présente une épaisseur inférieure à 10 mm, en particulier inférieur à 1 mm, de préférence de l'ordre de 0,05 mm.

7. Gaine de protection selon l'une quelconque des revendications précédentes, **caractérisée en ce que** le soudage du film de protection (3) est réalisé par transfert de chaleur ou par ultrason.

8. Gaine de protection selon l'une quelconque des revendications précédentes, **caractérisée en ce que** le film de protection (3) est soudé en une multiplicité de points de soudage (62) s'étendant dans une direction générale longitudinale à la gaine, notamment à une distance de l'ordre de 10 mm des bords longitudinaux du film de protection.

9. Gaine de protection selon l'une quelconque des revendications précédentes, **caractérisée en ce que** l'assemblage de fils comporte des fils fonctionnels, du type à fonction d'identification ou de repérage.

10. Procédé de fabrication d'une gaine selon l'une quelconque des revendications précédentes, comportant une étape d'assemblage de plusieurs fils dont des fils conducteurs de l'électricité pour former un ruban, une étape d'association d'un film de protection sur tout ou partie d'au moins l'une des faces du ruban, **caractérisé en ce que** l'étape d'association du film de protection est réalisée par soudage.

## Patentansprüche

1. Kabelmantel (1), eine Zusammenfügung umfassend aus mindestens einem elektrisch nichtleitenden Faden (4), der als Fadenseele bezeichnet wird und zu der dem Mantel gegebenen Endform beiträgt, und aus elektrisch leitenden Fäden (5), sowie aus mindestens einem Schutzfilm (3), der mindestens mit einer der ganzen oder teilweisen Mantelseiten verbunden ist, **dadurch gekennzeichnet, dass** der Schutzfilm (3) durch Schweißen mit der Fadenzusammenfügung verbunden ist.

2. Kabelmantel nach Anspruch 1, **dadurch gekennzeichnet, dass** die Fadenzusammenfügung mindestens einen Werkstoff umfasst, der das Schweißen des Schutzfilms ermöglicht.

3. Kabelmantel nach Anspruch 1 oder 2, **dadurch gekennzeichnet, dass** der Schutzfilm (3) entlang einer oder mehreren kontinuierlichen und/oder diskontinuierlichen Oberfläche(n) geschweißt ist.

4. Kabelmantel nach einem der vorausgehenden Ansprüche, **dadurch gekennzeichnet, dass** die Fadenzusammenfügung mindestens einen zusätzlichen nichtleitenden Faden (6, 60, 61) umfasst, der sich von der Fadenseele unterscheidet und für das Schweißen bestimmt ist, und welcher insbesondere aus einem anderen Werkstoff besteht als der Werkstoff der Fadenseele.

5. Kabelmantel nach einem der vorausgehenden Ansprüche, **dadurch gekennzeichnet, dass** die Fadenzusammenfügung durch Weben von mindestens einem Schussfaden, der von der Fadenseele (4) aus einem nichtleitenden Werkstoff gebildet wird, und von Kettfäden, die von den elektrisch leitenden Fäden (5) gebildet werden, erzielt wird, und gegebenenfalls von anderen Fäden aus einem nichtleitenden Werkstoff, wobei mindestens einer der Fäden aus einem nichtleichtenden Werkstoff, der für das Schweißen verwendet wird, als Kettfaden oder Schussfaden integriert ist.

6. Kabelmantel nach einem der vorausgehenden Ansprüche, **dadurch gekennzeichnet, dass** der Schutzfilm (3) eine Stärke unter 10 mm aufweist, insbesondere unter 1 mm und vorzugsweise eine Größenordnung von 0,05 mm hat.

7. Kabelmantel nach einer der vorausgehenden Ansprüche, **dadurch gekennzeichnet, dass** das Schweißen des Schutzfilms (3) durch Hitze- oder Ultraschallübertragung realisiert wird.

8. Kabelmantel nach einem der vorausgehenden Ansprüche, **dadurch gekennzeichnet, dass** der Schutzfilm (3) durch eine Vielzahl von Schweißpunkten (62) geschweißt wird, die sich in einer allgemeinen Längsrichtung zum Mantel erstrecken, insbesondere in einem Abstand von rund 10 mm zu den Längsrändern des Schutzfilms.

9. Kabelmantel nach einem der vorausgehenden Ansprüche, **dadurch gekennzeichnet, dass** die Fadenzusammenfügung Funktionsfäden zur Identifizierung oder Markierung umfasst.

10. Fertigungsverfahren für einen Kabelmantel nach einem der vorausgehenden Ansprüche, einen Schritt des Zusammenfügens von mehreren Fäden umfassend, darunter elektrisch leitende Fäden, um ein Band zu bilden, sowie einen Schritt des Verbindens eines Schutzfilms mit mindestens einer der ganzen oder teilweisen Seite(n) des Bandes, **dadurch gekennzeichnet, dass** der Schritt des Verbindens des Schutzfilms durch Schweißen realisiert wird.

## Claims

1. A protective sleeve (1) comprising an assembly of at least one electrically non-conductive thread (4), referred to as the core thread, which contributes to the final shape given to the sleeve, and electrically conductive threads (5), and at least one protective film (3) associated with all or part of at least one of the sides of the sleeve, **characterized in that** the protective film (3) is joined to the thread assembly by welding.

2. A protective sleeve according to claim 1, **characterized in that** the thread assembly comprises at least one material that allows the welding of the protective film.

3. A protective sleeve according to claim 1 or 2, **characterized in that** the protective film (3) is welded along one or more continuous and/or discontinuous surfaces.

4. A protective sleeve according to any of the preceding claims, **characterized in that** the thread assembly comprises at least one additional electrically non-conductive thread (6, 60, 61) distinct from the core thread and designed for welding, particularly made of material that is distinct from the core thread material.

5. A protective sleeve according to any of the preceding claims, **characterized in that** the thread assembly is achieved by weaving at least one weft thread formed by the core thread (4) in electrically non-conductive material and warp threads formed by conductive threads (5) and possibly other threads in electrically non-conductive material, wherein at least one of the threads in non-conductive material used for welding is incorporated as a warp or weft thread.

6. A protective sleeve according to any of the preceding claims, **characterized in that** the thickness of the protective film (3) is less than 10 mm, particularly less than 1 mm, preferably about 0.05 mm.

7. A protective sleeve according to any of the preceding claims, **characterized in that** the protective film (3) is welded by heat transfer or ultrasound.

8. A protective sleeve according to any of the preceding claims, **characterized in that** the protective film (3) is welded at several welding points (62) extending in a direction generally longitudinal to the sleeve, particularly at a distance of about 10 mm from the longitudinal ends of the protective film.

9. A protective sleeve according to any of the preceding claims, **characterized in that** the thread assembly comprises functional threads of the type that fulfill an identification or marking function.

10. A method for manufacturing a sleeve according to any of the preceding claims, comprising a step of assembling several threads including electrically conductive threads to form a tape, a step for joining protective film over all or part of at least one of the sides of the tape, **characterized in that** the step of joining the protective film is carried out by welding.
